# EUROPEAN PATENT APPLICATION

(11) **EP 2 827 078 A1**
(43) Date of publication of application: **21.01.2015**
(21) Application number: 14176938.0
(22) Date of filing: 14.07.2014
(51) Int. Cl.: F24J 2/05, F24J 2/46

(54) **Solar heat collector for heating a circulating fluid and process for manufacturing a solar heat collector**

(30) Priority: 17.07.2013 CH 12792013; 27.09.2013 CH 16542013
(71) Applicant: Furter, Urs, 5614 Sarmenstorf (CH)
(72) Inventor: Furter, Urs, 5614 Sarmenstorf (CH)
(74) Representative: Spierenburg, Pieter

(57) **Abstract**

A novel solar heat collector (1) is presented for heating a circulating fluid with an inner glass tube (3) and an outer glass tube (6). The glass tubes are connected at their open ends (4, 7), and the space between the inner tube (3) and the outer tube (6) being evacuated, whereas the inner space of the inner tube (3) being divided by an insert (10) to define a first channel (11) and a second channel (12). Said channels are connected at the closed end (5) of the inner tube. The inner glass tube (3) and the outer glass tube (6) have smooth inner and outer surfaces and the insert (10) is provided such that the first and second channels (11, 12) and a space (13) between the end of the insert (10) and the closed end (5) of the inner tube (3) define the same cross-section.

## Description

### FIELD OF THE INVENTION

The invention relates generally to the field of solar thermal energy. In particular, the present invention relates to a solar heat collector with an evacuated glass tube.

### BACKGROUND OF THE INVENTION

Solar heat collectors convert the energy of sunlight into thermal heat. Sunlight provides energy in the form of electromagnetic radiation from infrared to ultraviolet. Such solar heat collectors are generally known in the art.

For instance in WO-A-81/00615 an electromagnetic energy collector assembly is described in which a transparent cylindrical glass tube made from common glass tubing lengths is sealed under vacuum at one end to an inner cylindrical energy absorber having a plurality of grooves on the exterior surface. The inner absorber tube may be constructed of glass, metal or other material, and the energy absorbing surfaces have grooves which are helical, or parallel or longitudinal to the normal axis of the absorber. An annular cross-connecting tube extends through the inner absorber tube to a position spaced apart from the closed end of the inner absorber tube. One or more of these energy collectors are detachably connected only through the cross-connecting tube to a manifold system for circulation of a fluid working media as gas or water, which is eventually utilized in any application of thermal energy, e.g. heating, cooling or driving a turbine.

In WO-A-2011/017750 a solar heat generator is described which comprises at least one evacuated glass tube having an internal cavity extending from an open end to a closed end of the tube. An insert is adapted to be positioned within the internal cavity to define at least a first channel and a second channel within the cavity. The first and second channels being adapted such that fluid flowing into the first channel from the open end is directed along the first channel toward the closed end and into the second channel then along the second channel toward the open end.

The solar heat generator of above mentioned reference is described only in very general terms and does not define the necessary details to provide a secure and reliable flow of the fluid through the first and second channels. Moreover, it cannot be derived neither from the description nor from the drawings which dimensions and cross-sections the first and second channel and the open connection between the first and second channel should have.

### OBJECT OF THE INVENTION

It is an object of the present invention to improve the known solar heat collector by allowing a smooth flowing of the fluid through the first and second channels of the glass tube of the heat collector. It is another object of the present invention to provide a manufacturing process for a solar heat collector.

These objects are achieved by a solar heat collector with the features of claim 1 and a manufacturing process with the features of claim 12.

In order to obtain a smooth flowing of the fluid in a solar heat collector it is important that the insert should separate the inner glass tube such that channels with exactly the same cross-section are created and also that the end of the insert is mounted to the glass tube such that the cross-section between the end of the insert and the bottom of the glass tube is commensurate to the cross-section of both channels. Further advantages of the present invention can be derived from the dependent claims and from the following description.

### BRIEF DESCRIPTION OF THE FIGURES

In the following, the invention is described in greater detail, by way of example, with reference to the accompanying drawings. In the figures there is shown:
- Fig. 1: a solar heat collector mounted on an air supply duct,
- Fig. 2 to 5: a manifold for mounting several solar heat collectors in line,
- Fig. 6: a cross-section through the solar heat collector mounted on the manifold,
- Fig. 7: two solar heat collectors mounted on the manifold,
- Fig. 8, 9: a first embodiment of the insert for the solar heat collector,
- Fig. 10, 11: a second embodiment of the insert for the solar heat collector,
- Fig. 12, 13: a third embodiment of the insert for the solar heat collector,
- Fig. 14, 15: a fourth embodiment of the insert for the solar heat collector,
- Fig. 16, 17: a fifth embodiment of the insert for the solar heat collector, and
- Fig. 18, 19: a sixth embodiment of the insert for the solar heat collector.

### DETAILED DESCRIPTION

The same reference signs are used in each case for the same elements and initial explanations relate to all figures, if not otherwise expressly noted.

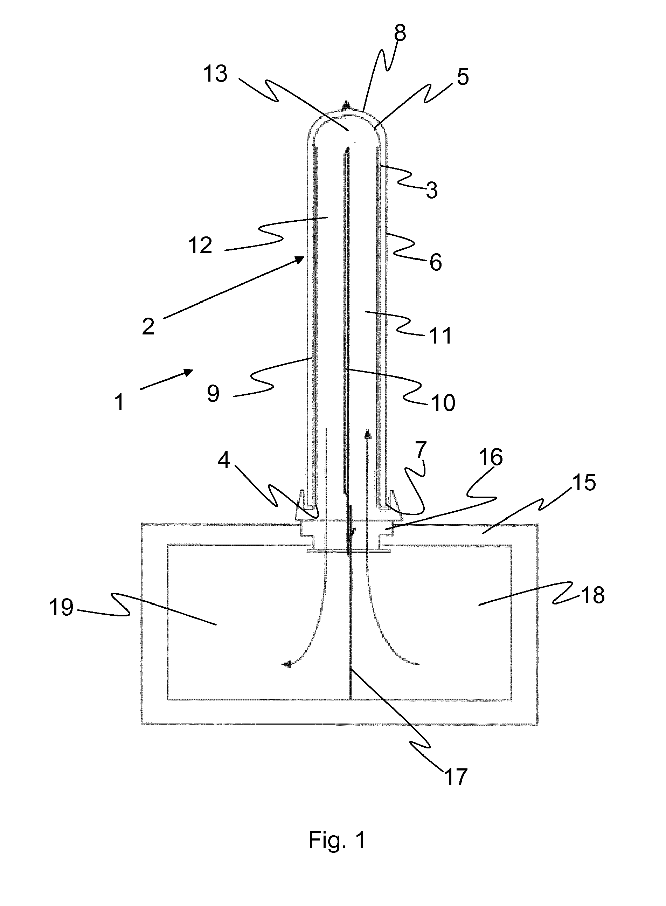

In Figure 1 an exemplary embodiment of a solar heat collector 1 for heating a circulating fluid is shown in cross-section, which comprises an evacuated glass tube 2 with an inner glass tube 3 having an open end 4 and a closed end 5 and an outer glass tube 6 having an open end 7 and a closed end 8. The open end 4 of the inner glass tube 3 and the open end 7 of the outer glass tube 6 are joint and sealed, whereas the inner space between both glass tubes 3 and 6 is evacuated. The inner and outer tubes 3 and 6 have smooth inner and outer surfaces. The outer wall of the inner glass tube 3 has a thin coating 9 of carbon black, aluminum, copper, silver or phosphor coating with a thickness of about 1000 Å. An insert 10 is positioned exactly on the central axis of the inner glass tube 3, such that a first channel 11 and a second channel 12 are defined in the inner glass tube 3, which are identical, i.e. the first and second channels have the same cross-section. The upper end of the insert 10 is provided at a distance to the closed end 5 of the inner glass tube 3, which leaves open a space 13 with the same dimension as the cross-sections of the first and second channels 11 and 12. The solar heat collector 1 is mounted on a duct 15 by means of a circular coupling piece 16. The duct 15 is divided by a partition 17 in a supply channel 18 and a return channel 19.

The inner and outer glass tubes 3 and 6 have a wall thickness of 1-2 mm. The inner glass tube 3 has an inner diameter of 40-45 mm, preferably 43 mm. The outer glass tube 6 has an outer diameter of 60-65 mm, preferably 63 mm. However, the inner diameter can be up to 150 mm and the outer diameter up to 170 mm. The total length of the outer tube 6 is between 150 cm and 180 cm.

The insert 10 can be a thin plate of glass or made of sheet metal. Other materials as synthetic material, ceramics or carbon fibres can be used for producing the insert 10. The insert 10 has a thickness of about 0.5 to 1.0 mm.

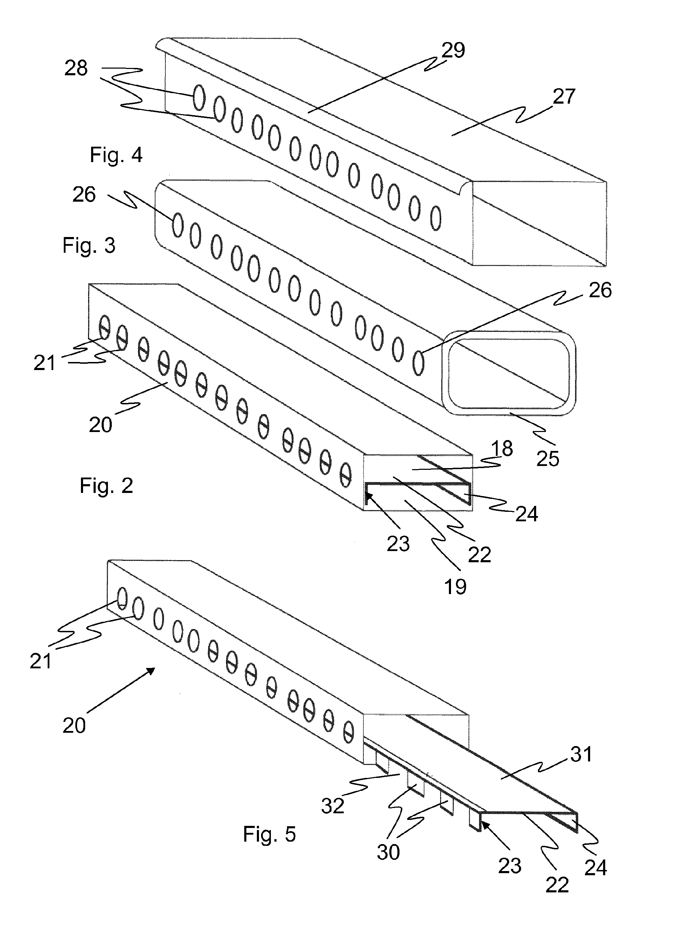

Figure 2 shows a rectangular duct or manifold 20 made of sheet metal with several circular openings 21 on which a row of solar heat collectors 1 can be connected. Other materials as synthetic material, ceramics or carbon fibres can also be used for producing the duct 20. In the duct 20 a partition 22 of sheet metal with upstanding edges 23 and 24 is inserted which divides the interior of the duct 20 by forming supply channel 18 and return channel 19. Figure 3 shows an insolation tube 25 with openings 26 which correspond to the openings 21 of duct 20. The insolation tube 25 is a sleeve made of glass wool, rockwool or ceramic insulation. In Figure 4 a rectangular cover 27 is shown with openings 28 corresponding to the openings 21. A small overlap 29 is provided to the cover 27 for closing. In use the duct 20 is surrounded by the insolation tube 25 which is enclosed by cover 27.

In Fig. 5 duct 20 with partition 22 is shown in more detail. The upstanding edge 23 comprises distancing parts 30 bent at right angles to the central sheet plate 31 of the partition 22 whereas there are gaps 32 between the distancing parts 30 commensurate to the width of the circular openings 21 of the duct 20. At the opposite side of the distancing parts 30 the edge 24 bent at right angles to the central sheet plate 30 is continuous.

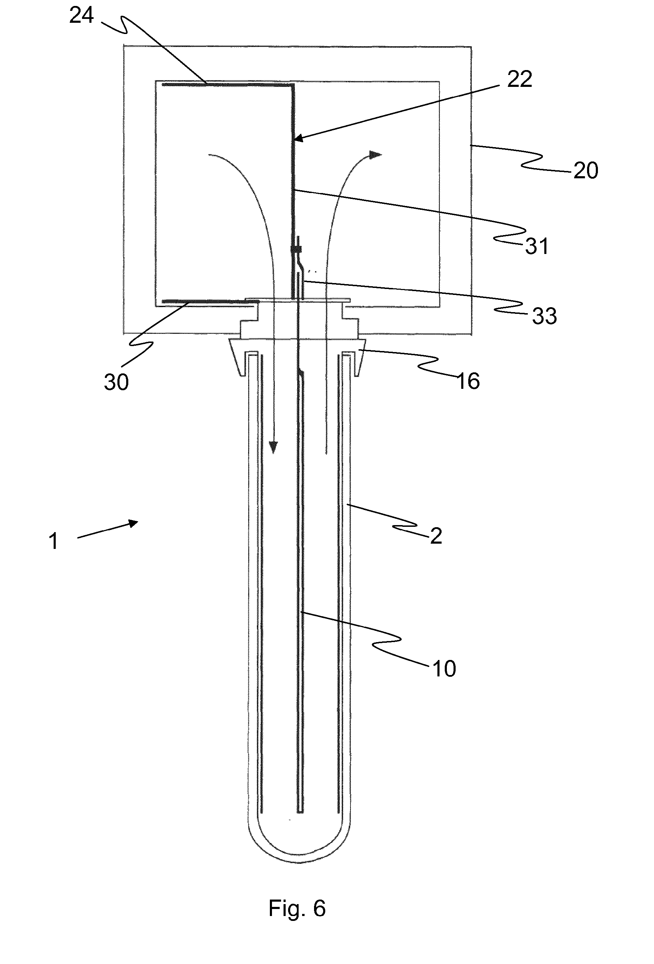

Fig. 6 shows a cross-section through the solar heat collector 1 mounted on the duct 20, whereas the partition 22 with the upstanding edge 24 and a distancing part 30 can be seen. On the central sheet plate 31 of the partition 22 an elongate clip member 33 is mounted, in which clip member 33 the insert 10 of the solar heat collector 1 is jammed in between.

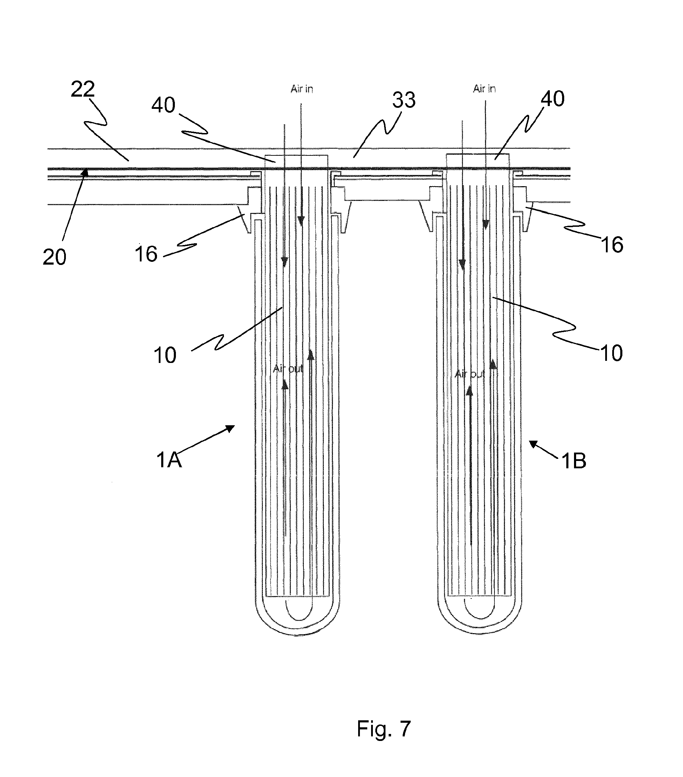

Fig. 7 shows two solar heat collectors 1A and 1 B mounted on the duct 20 to show the air flow by arrows "Air in" and "Air out" through the evacuated glass tubes 2 and into the duct 20.

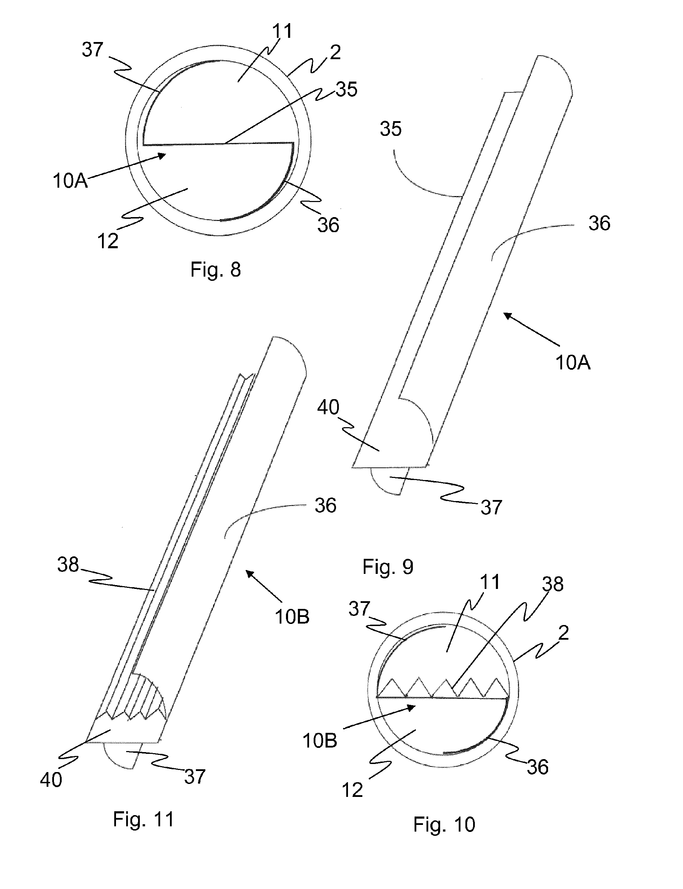

In Figures 8 to 19 different variants of the insert 10 are depicted.

Figure 8 shows a cross-section through the evacuated glass tube 2 and a first embodiment 10A of the insert 10 with a flat central part 35 and two identical curved wings 36 and 37 which are pressing against the inner wall of the evacuated glass tube 2. The wings 36 and 37 have the same curvature as the curvature of the inner tube of the evacuated glass tube 2. Figure 9 shows the insert 10A in perspective view. As can be seen in Fig. 9 the lengths of the wings 36 and 37 is little shorter as the length of the flat central part 35 so that a free end 40 is left.

Returning now to Fig. 7 the free ends 40 of the inserts 10 of heat collectors 1A and 1 B are clamped by the clip member 33 to the partition 22 of duct 20. Thus, the wings 36 and 37 of the insert 10A (see Fig. 8) are flush with the duct 20 to create an even and smooth fluid flow between the duct 20 and the evacuated glass tube 2.

Figure 10 shows a cross-section and Fig. 11 a perspective view of a second embodiment 10B of the insert 10 with a serrated central part 38 and the two identical curved wings 36 and 37. The ribs of central part 38 have a triangular shape and a width of 5-10 mm.

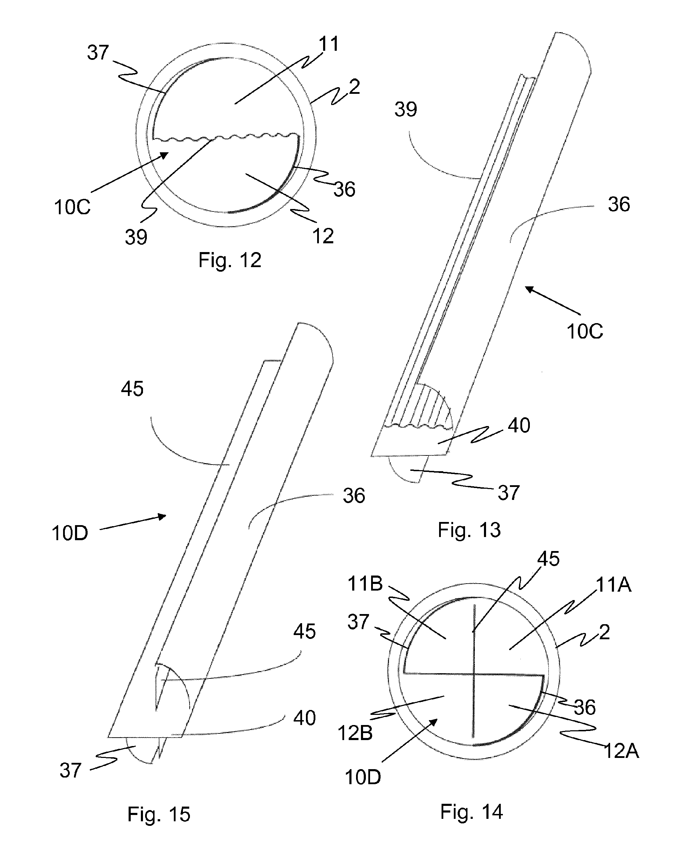

Figure 12 shows a cross-section and Figure 13 a perspective view of a third embodiment 10C of the insert 10 with a corrugated central part 39 and the two identical curved wings 36 and 37.

The serrated central part 38 of insert 10B (see Fig. 10) and the corrugated central part 39 of insert 10C exert more tension to the curved wings 36 and 37 towards the inner wall of the evacuated tube 2 so that the wings 36 and 37 provide a secure seal against the inner wall so that the first and second channels 11 and 12 are sealed hermitically over the length of the insert 10B and 10C respectively.

In Figure 14 a cross-section and in Figure 15 a perspective view of a fourth embodiment 10D of the insert 10 is shown having a cross shaped inner part 45 which divide the inner space of the evacuated glass tube 2 in two first channels 11A and 11 B for the inflow of the fluid and two second channels 12A and 12B for the outflow of the fluid.

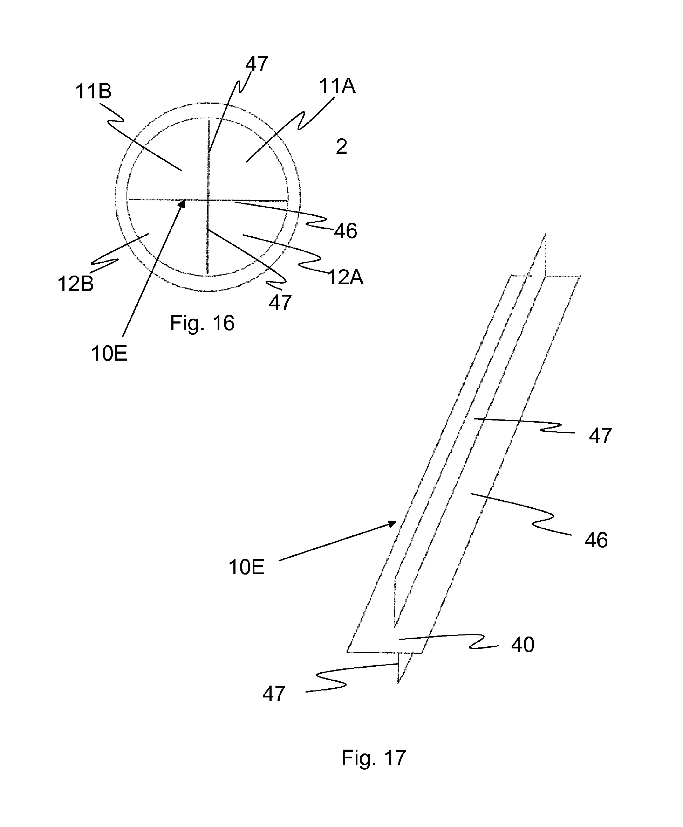

In Figure 16 a cross-section and in Figure 17 a perspective view of a fifth embodiment 10E of the insert 10 is shown, in which the insert 10E is a generally cross-shaped without wings. The insert 10E consists of an elongated first flat sheet metal part 46 and two identical second flat sheet metal parts 47 which have half the width of the first part 46 and a length which is little shorter as the length of the first part 46 leaving the free end 40 for connecting the insert 10E with the clip member 33 (see Fig. 6). The two second parts 47 are mounted in right angles along the centre lines on both sides of the first part 46. In the embodiment 10E the width of the first flat sheet metal part 46 is exactly commensurate to the inner diameter of the evacuated glass tube 2, so that the cross-shaped insert 10E is fixed in the glass tube 2 when it is inserted. In this manner there are likewise two first channels 11 A and 11 B for the inflow of the fluid and two second channels 12A and 12B for the outflow of the fluid.

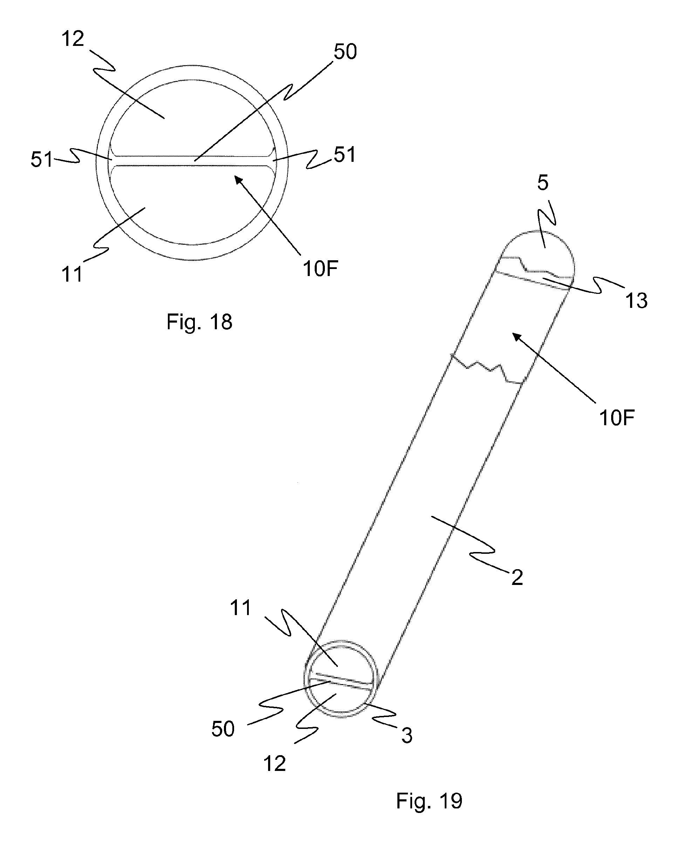

In Figure 18 a cross-section and in Figure 19 a perspective view of a sixth embodiment 10F of the insert 10 is shown, in which the insert has a flat central part 50 and bulging edges 51 with rounded rims so that the insert 10F is pinched towards the inner glass tube 3. Also here there is an open space 13 with the same dimension as the cross-sections of the first and second channels 11 and 12. In Figure 19 the evacuated glass tube 2 is partly cut away to show the insert 10F and the open space 13 at the closed end 5.

Instead of pinching the insert 10F within the inner glass tube 3, the insert 10F can be manufactured in one piece with the production of the inner glass tube 3.

The solar heat collector as described above is manufactured as follows: the inner glass tube 3 having an open end 4 and a closed end 5 and the outer glass tube 6 having an open end 7 and a closed end 8 are produced and both glass tubes are connected at the open ends 4 and 7, such that a space is left between the inner tube 3 and the outer tube 6. Said space is then evacuated by means of an evacuation pump. Further the insert 10 is provided into the inner tube 1 which divide the inner tube 1 in a first channel 11 and a second channel 12 such that the first and second channels and a space 13 between the end of the insert 10 and the closed end 5 of the inner tube 3 define the same cross-section.

## Claims

1. Solar heat collector (1) for heating a circulating fluid with an inner glass tube (3) having an open end (4) and a closed end (5) and an outer glass tube (6) having an open end (7) and a closed end (8), which glass tubes are connected at the open ends (4, 7) of both glass tubes, and the space between the inner tube (3) and the outer tube (6) being evacuated, whereas the inner space of the inner tube (3) being divided by an insert (10) to define a first channel (11) and a second channel (12) within the inner tube (3), said channels being connected at the closed end (5) of the inner tube, **characterized in that** the inner glass tube (3) and the outer glass tube (6) have smooth inner and outer surfaces and that the insert (10) is provided such that the first and second channels (11, 12) and a space (13) between the end of the insert (10) and the closed end (5) of the inner tube (3) defining the same cross-section.

2. Solar heat collector according to claim 1, **characterized in that** the insert (10) is a thin plate of glass dividing the inner space of the inner glass tube, such that the first and second channels (11, 12) are identical.

3. Solar heat collector according to claim 1 or claim 2, characterized that the insert (10) is extruded in one-piece with the inner glass tube.

4. Solar heat collector according to claim 1, **characterized in that** the insert (10) is a sheet metal dividing the inner space of the inner glass tube, such that the first and second channels (11, 12) are identical.

5. Solar heat collector according to one of claims 2 to 4, characterized that the insert (10A) has on both length sides curved wings (36, 37) having the same curvature as the curvature of the inner tube.

6. Solar heat collector according to claim 5, **characterized in that** the wings (36, 37) are press-fit arranged towards the inner surface of the inner glass tube.

7. Solar heat collector according to one of claims 2 to 6, **characterized in that** at least one surface of the insert (10B, 10C) having longitudinal ribs.

8. Solar heat collector according to claim 7, **characterized in that** the ribs (38) have a triangular shape.

9. Solar heat collector according to claim 7, **characterized in that** the ribs (39) have a corrugated shape.

10. Solar heat collector according to one of claims 1 to 5, **characterized in that** the insert (10D, 10E) has a cross shaped inner part (45), which divides the inner space of the evacuated glass tube (2) in two first channels (11 A, 11 B) and in two second channels (12A, 12B).

11. Solar heat collector according to claim 10, **characterized in that** the cross shaped inner part (45) comprising an elongated first flat sheet metal part (46) and two identical second flat sheet metal parts (47) which are mounted at right angles along the centre lines on both sides of the first sheet metal part (46), whereas the width of first part (46) and of the two second parts (47) are commensurate to the inner diameter of the evacuated glass tube (2).

12. Solar heat collector according to one of claims 1 to 4, **characterized in that** the insert (10F) has a flat central part (50) and bulging edges (51) with rounded rims so that the insert (10F) is pinched towards the inner glass tube (3) of the evacuated glass tube (2).

13. Process for manufacturing a solar heat collector according to one of claims 1 to 11, wherein an inner glass tube (3) having an open end (4) and a closed end (5) and an outer glass tube (6) having an open end (7) and a closed end (8) are produced and connected at the open ends (4, 7) of both glass tubes, such that a space is left between the inner tube (3) and the outer tube (6), wherein further said space is evacuated by means of an evacuation pump, further providing an insert into the inner tube (1) which divide the inner tube (1) in a first channel (11) and a second channel (12) such that the first and second channels (11, 12) and a space (13) between the end of the insert (10) and the closed end (5) of the inner tube (3) define the same cross-section.

14. Process according to claim 13, **characterized in that** the insert (10) made of glass is extruded in one piece with the production of the inner tube (3).
